# DEMANDE DE BREVET EUROPEEN

(11) **EP 1 324 164 A1**
(43) Date de publication de la demande: **02.07.2003**
(21) Numéro de dépôt: 02080211.2
(22) Date de dépôt: 10.12.2002
(51) Int. Cl.: G04G 11/00, G06F 12/02

(54) **Dispositif et procédé de gestion mémoire dans une montre électronique**

(30) Priorité: 27.12.2001 EP 12051819
(71) Demandeur: ASULAB S.A., 2074 Marin (CH)
(72) Inventeur: Guanter, Jean-Charles, 2517 Diesse (CH)
(74) Mandataire: Noll, Ronald

(57) **Abrégé**

Le dispositif de gestion mémoire dans une montre électronique de type agenda comprend une mémoire non volatile (15) reliée à une unité à microprocesseur (14). L'unité est programmée pour gérer des opérations d'enregistrement et/ou de suppression de données et/ou de paramètres dans la mémoire. L'activation d'au moins une touche de la montre (C1) permet de fournir une commande à l'unité pour la gestion d'opérations d'enregistrement et/ou de suppression des données et/ou des paramètres. La mémoire (15) comprend une première zone statique (100) pour mémoriser des données et/ou des paramètres dans des positions mémoire fixes et une seconde zone dynamique (101) pour mémoriser des fiches de données de différents types. La position mémoire des fiches de chaque type est gérée par l'unité à microprocesseur (14) en fonction de modification ou suppression de certaines fiches et en fonction de l'enregistrement de nouvelles fiches. Chaque fiche débute par une entête dans laquelle sont placés deux pointeurs pour établir un lien avec une fiche suivante et une fiche précédente de même type. L'unité à microprocesseur (14) permet de compacter ou compresser l'espace mémoire des fiches de données mémorisées de la zone dynamique (101) de manière automatique ou par l'activation d'au moins une touche de la montre (C1).

## Description

La présente invention a pour objet un dispositif de gestion mémoire dans une montre électronique à affichage de l'heure de manière digitale et/ou analogique, notamment dans une montre agenda. Plusieurs données mémorisées ou à mémoriser peuvent être éditées, modifiées ou supprimées dans ladite montre à l'aide de touches. Ces touches peuvent être des boutons-poussoirs ou des capteurs dont des plages sensibles au toucher sont disposées sur une face intérieure ou extérieure du verre de montre. Le dispositif de gestion mémoire comprend notamment une unité à microprocesseur programmée pour gérer des opérations d'enregistrement et/ou de suppression de données et/ou de paramètres dans une mémoire non volatile. Certaines opérations de l'unité peuvent être commandées par l'action sur au moins une touche de commande. Cette unité peut comporter également certains modules en relation avec la base de temps de la montre.

L'invention concerne également un procédé de gestion mémoire dans une montre électronique.

La gestion mémoire concerne aussi bien l'optimisation de l'agencement des paramètres et/ou des données mémorisés ou leur enregistrement dans la mémoire, que la manière de retrouver, modifier ou supprimer les données mémorisées dans la mémoire.

Les données introduites dans la montre concernent de préférence des données d'une fonction agenda de la montre. Lorsque cette fonction agenda est opérationnelle, il est possible de consulter des fiches de données préalablement enregistrées en activant certaines touches de la montre dans différents menus. Les différents menus de cette fonction agenda concernent des notes, un répertoire d'adresses, un agenda, une transmission de données par signaux radiofréquences et des paramètres.

Dans certains menus sélectionnés, les données rédigées sont placées dans des champs de fiches de différents types. Ces fiches éditées sont mémorisées dans la mémoire afin de pouvoir être consultées subséquemment ou transmises à une unité périphérique si la montre possède des moyens d'émission et/ou de réception de signaux radiofréquences courte distance. Dans ces conditions, une unité périphérique peut également transmettre à la montre d'autres données de la fonction agenda éditées sur ladite unité de manière que la montre mémorise les données reçues.

Comme la montre électronique est un instrument de petit volume qui est alimenté par une source d'énergie à faible puissance, il est nécessaire de rapidement mémoriser les fiches de données introduites à l'aide des touches ou les données reçues d'une unité périphérique. De plus, les données des fiches doivent être facilement et rapidement retrouvées dans la mémoire.

A cet effet, l'invention a pour objet un dispositif de gestion mémoire dans une montre électronique, notamment une montre agenda, cité ci-devant, qui se caractérise en ce que la mémoire comprend une première zone statique pour mémoriser des données et/ou des paramètres dans des positions mémoire fixes et une seconde zone dynamique pour mémoriser des fiches de données de différents types, la position mémoire des fiches de chaque type étant gérée par l'unité à microprocesseur en fonction de modification ou suppression de certaines fiches et en fonction de l'enregistrement de nouvelles fiches, chaque fiche débutant par une entête dans laquelle est placé un premier pointeur pour établir un lien entre les fiches de même type dans la zone dynamique de la mémoire, et en ce que l'unité à microprocesseur est agencée pour compacter ou compresser l'espace mémoire des fiches de données mémorisées de la zone dynamique de manière automatique ou par l'activation d'au moins une touche de validation de la montre.

A cet effet, l'invention a également pour objet un procédé de gestion mémoire dans une montre électronique, qui se caractérise en ce qu'il comprend des étapes consistant à :
- mémoriser des fiches de données d'au moins un type parmi plusieurs types, chaque type de fiches débutant par une entête dans laquelle est placé un premier pointeur pour établir un lien entre les fiches de même type dans la zone dynamique de la mémoire,
- compacter ou compresser l'espace mémoire des fiches de données mémorisées dans la zone dynamique de la mémoire par l'unité à microprocesseur de manière automatique ou par l'activation d'au moins une touche de validation de la montre, et
- afficher sur au moins un affichage à cristaux liquides de la montre une capacité mémoire utilisée avant ou après l'opération de compactage de l'espace mémoire des fiches de données mémorisées.

Un avantage du dispositif et du procédé de gestion mémoire, selon l'invention, est qu'il est possible de rapidement retrouver les données de chaque fiche mémorisée dans la zone dynamique de la mémoire. Pour ce faire, une chaîne est établie pour chaque type de fiche par une entête de chaque fiche pointant sur une fiche précédente et/ou sur une fiche suivante. Ainsi, une chaîne de liaison entre chaque type de fiche dans la zone dynamique de la mémoire permet de parcourir et retrouver rapidement les données à afficher sur au moins un affichage à cristaux liquides de la montre lors d'une consultation. Pour permettre à l'unité à microprocesseur de parcourir et retrouver rapidement et facilement ces chaînes, la zone statique comprend des pointeurs pour chaque type de fiches désignant les première et dernière fiches de chaque type. De plus, une information sur le nombre de fiches pour chaque type est mémorisée dans la zone statique.

Un autre avantage du dispositif et du procédé de gestion mémoire, selon l'invention, est qu'une compression de l'espace mémoire des fiches de données mémorisées de la zone dynamique peut être exécutée de manière automatique ou par l'action sur au moins une touche de la montre. L'espace mémoire de la zone dynamique peut être compacté ou compressé de manière automatique par exemple en programmant l'unité à microprocesseur pour déclencher cette opération par période déterminée. Ces périodes programmées peuvent être des jours, des mois ou d'autres durées. Comme la mémoire d'un instrument de petit volume a une capacité de mémorisation relativement restreinte, il est nécessaire de compacter ou compresser l'espace mémoire des données mémorisées dans la zone dynamique de la mémoire.

Plusieurs espaces vides subsistent entre plusieurs fiches mémorisées dans cette zone dynamique par suite notamment de modification de fiches ou de suppression de fiches. Dans le cas d'une modification d'une fiche, cette dernière est placée à la suite de toutes les fiches mémorisées si la modification occasionne une place mémoire plus grande. Ainsi, des espaces vides subsistent après déplacement de la fiche modifiée. De plus à chaque fiche supprimée, une fiche de destruction non visible remplace la fiche supprimée. Cette fiche de destruction est conservée pendant une période déterminée. Comme cette fiche de destruction occupe une place mémoire plus petite ou égale à toute autre fiche, il subsiste des espaces vides entre la fin de cette fiche de destruction et une prochaine fiche. Ainsi, ces multiples opérations de modification ou suppression de fiches de données restreignent la capacité mémoire pour mémoriser d'autres fiches. De ce fait, il devient nécessaire de compacter ou compresser l'espace mémoire des données mémorisées de manière à libérer de la place mémoire pour d'autres fiches à mémoriser.

Dans le cas où des données doivent être envoyées par des moyens d'émission et/ou de réception de signaux radiofréquences courte distance à une unité périphérique, le fait de compacter l'espace mémoire des fiches de données mémorisées de la zone dynamique permet de réduire le temps de transmission. De ce fait, une réduction de consommation peut être réalisée.

Le dispositif de gestion mémoire pour la montre comprend de préférence des touches sous forme de capteurs, dont les plages sensibles au toucher sont disposées sur une face intérieure ou extérieure du verre de montre. Ainsi, dans un menu paramètres sélectionné, une commande de compactage ou de compression de la zone dynamique peut être facilement fournie à l'unité à microprocesseur en activant au moins un capteur par un doigt d'un utilisateur. Le capteur de validation peut avantageusement être disposé au centre du verre. Par mesure de précaution, il est préférable que le capteur de validation soit activé pendant une durée déterminée, par exemple plus de 2 s, pour lancer l'opération de compactage.

Les buts, avantages et caractéristiques du dispositif et du procédé de gestion mémoire notamment pour une montre agenda électronique apparaîtront mieux dans la description suivante d'au moins une forme d'exécution illustrée par les dessins sur lesquels :
- la figure 1 représente une vue de dessus d'une montre agenda électronique à affichage analogique de l'heure qui comprend un dispositif de gestion mémoire selon l'invention,
- la figure 2 représente schématiquement différents blocs électroniques de la montre agenda dont le dispositif de gestion mémoire selon l'invention,
- la figure 3 représente une entête de chaque fiche mémorisée dans une zone dynamique d'une mémoire non volatile du dispositif selon l'invention,
- les figures 4a à 4d représentent des exemples de fiches note, adresse, agenda et destruction mémorisées dans la zone dynamique de la mémoire non volatile du dispositif selon l'invention,
- la figure 5a représente de manière simplifiée une mémoire non volatile qui comprend une zone statique et une zone dynamique avec des fiches de données avant l'opération de compactage du procédé selon l'invention, et
- la figure 5b représente de manière simplifiée une mémoire non volatile qui comprend une zone statique et une zone dynamique avec des fiches de données après l'opération de compactage du procédé selon l'invention.

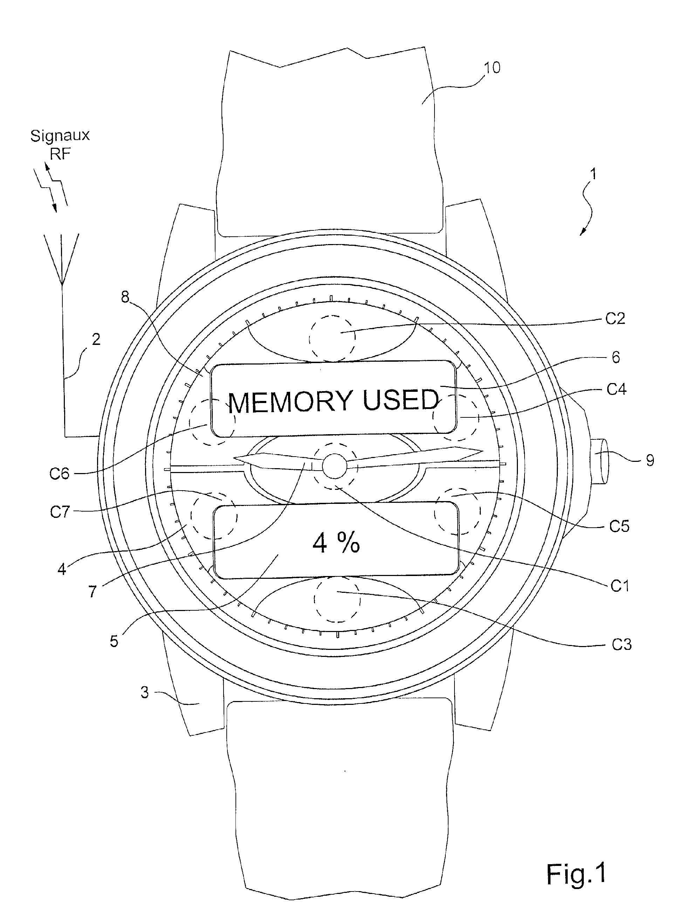

Dans l'exemple représenté à la figure 1, la montre agenda 1, pour la mise en oeuvre du procédé de gestion mémoire selon l'invention, est de type bracelet 10 à affichage analogique de l'heure. Elle comporte de façon connue un boîtier 3, délimité par une carrure-lunette et un fond, un cadran 8 avec deux affichages à cristaux liquides 5 et 6 de type matriciel, des aiguilles 7 pour indiquer l'heure, des touches constituées d'un bouton-poussoir 9 et de capteurs sensibles au toucher C1 à C7, et un verre 4 fermant le boîtier. Le verre peut être un verre saphir inrayable.

Les capteurs C1 à C7 sont de préférence de type capacitif. Les plages sensibles des capteurs, qui sont de très fines couches conductrices transparentes, sont disposées sur une face intérieure du verre 4. Ces plages sensibles au toucher sont représentées sur la figure 1 par des cercles en traits interrompus. Il est bien clair que les capteurs peuvent aussi être du type résistif. Dans ce cas, les plages sensibles doivent être disposées sur une face extérieure de verre.

Pour des détails techniques relatifs au traitement des signaux des capteurs, le lecteur peut se référer au document EP 0 838 737 du même Demandeur qui est cité en référence.

Le boîtier contient encore sous le cadran 8 un circuit garde-temps et/ou un mouvement horloger électronique alimenté par une source d'énergie, telle qu'une pile ou un accumulateur, non visibles sur la figure 1, pour entraîner les aiguilles 7 des heures et des minutes. La source d'énergie peut être constituée par exemple de deux piles d'oxyde d'argent branchées en série à 1,55 V chacune et du type RENATA 350. De plus, des moyens d'émission et/ou de réception de signaux radiofréquences peuvent être prévus pour communiquer à courte distance avec une unité périphérique, telle qu'une station d'ordinateur. Des données d'agenda peuvent ainsi être transférées de manière bidirectionnelle lorsque la communication est établie. Une antenne 2 des moyens d'émission et/ou de réception est montrée de manière simplifiée à la figure 1.

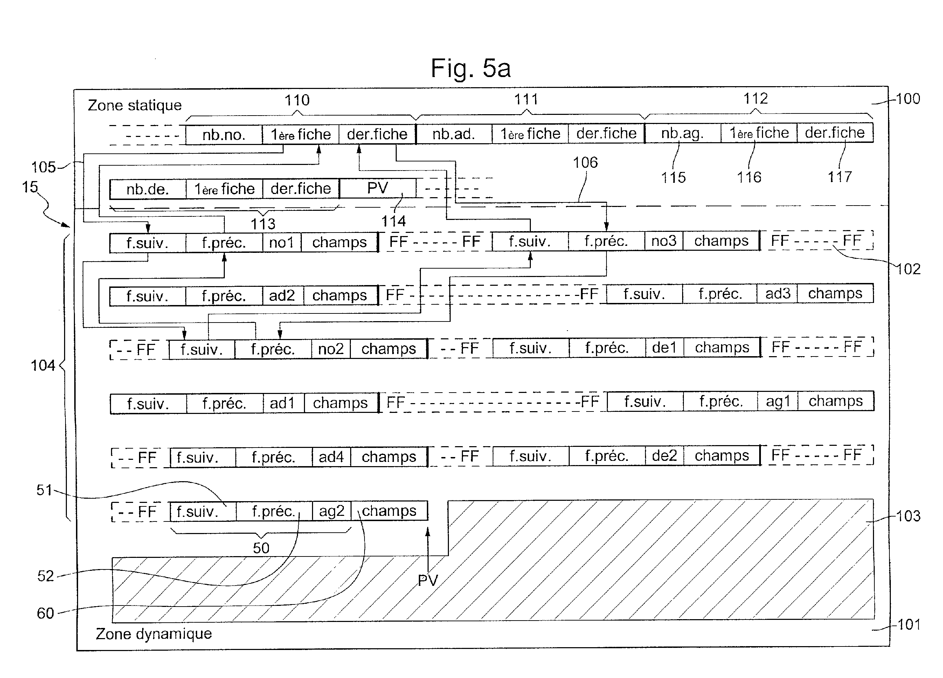

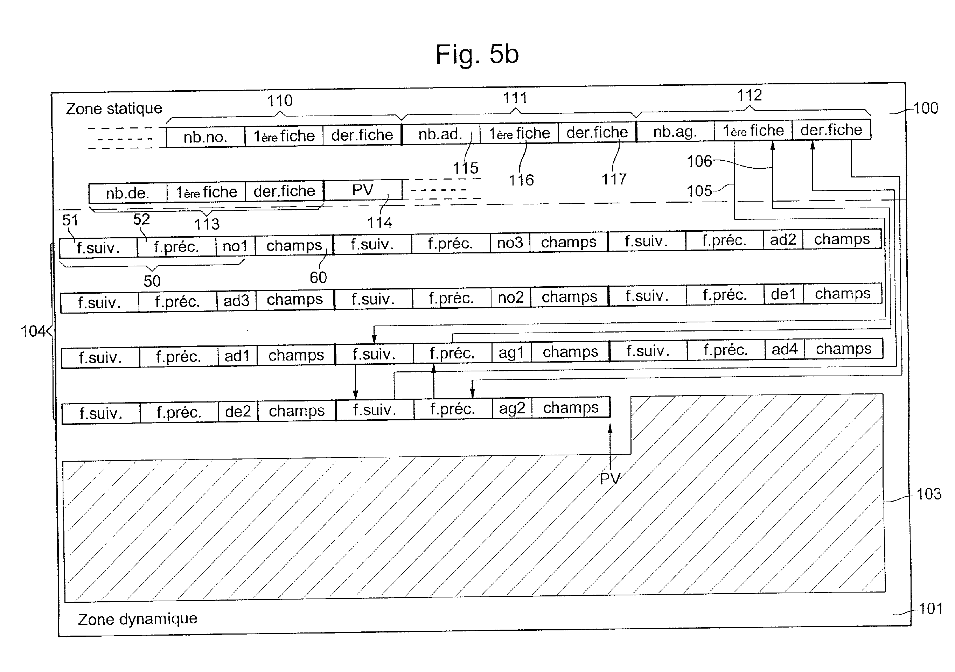

Les deux affichages à cristaux liquides 5 et 6 sont de préférence de dimension équivalente situés de part et d'autre de l'axe des aiguilles. Ces affichages 5 et 6 sont par exemple fixés au dos du cadran 8 et apparaissent dans deux ouvertures du cadran 8. Les deux affichages sont utilisés principalement pour la fonction agenda afin d'afficher, dans une direction perpendiculaire à la longueur du bracelet 10, différents menus à consulter et des champs de fiches de données éditées et mémorisées. Dans un menu paramètres sélectionné, des informations de la capacité mémoire utilisée sont affichées sur les affichages 5 et 6. Dès cet instant en activant au moins une touche de commande, de préférence le capteur C1 pendant une durée déterminée, par exemple supérieure à 2 s, des opérations de compactage ou compression de la mémoire sont réalisées pour libérer de la place mémoire. Ces opérations de compactage seront expliqués ci-après en référence aux figures 5a et 5b.

Pour réaliser différentes opérations de la fonction agenda, le nombre de capteurs est compris entre trois et dix et de préférence égal à sept. Une plage sensible C1 est placée au centre du verre, alors que les plages sensibles C2 à C7 des autres capteurs sont disposées en périphérie du verre au-dessus et au-dessous des indications 3h et 9h, et sur les indications 6h et 12h. Cette disposition permet de faciliter la commande de diverses opérations de la fonction agenda et le réglage de certains paramètres. Le capteur de validation au centre C1 est principalement utilisé pour fournir des commandes pour confirmer la mémorisation et/ou la suppression de données, ainsi que pour lancer les opérations de compactage ou compression de l'espace mémoire des données.

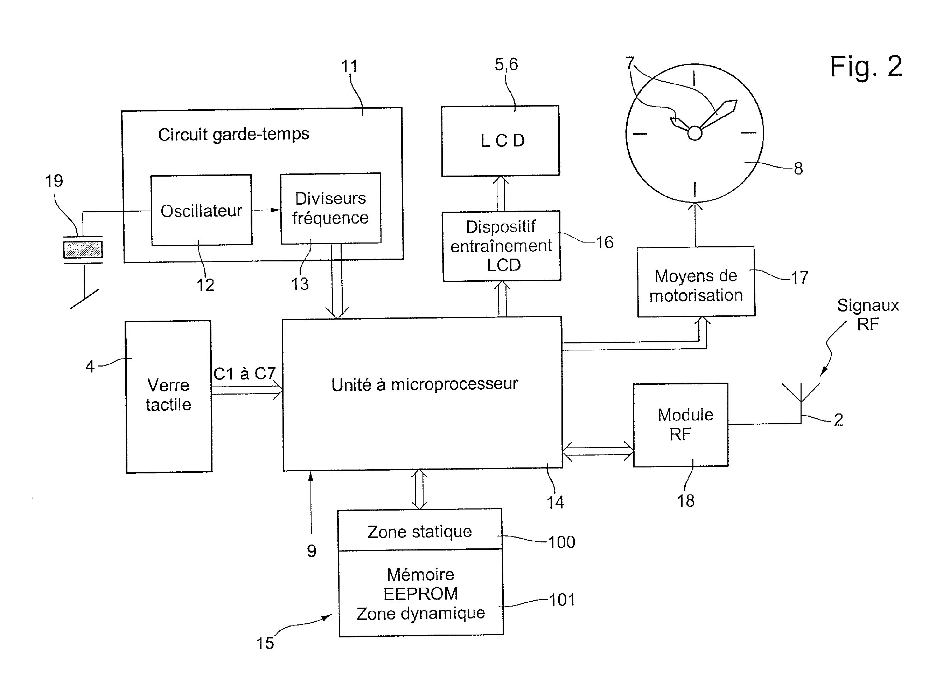

Comme montré à la figure 2, le dispositif de gestion mémoire comprend essentiellement une mémoire non volatile 15, telle qu'une mémoire EEPROM, reliée à une unité à microprocesseur 14 programmée notamment pour la gestion d'opérations d'enregistrement et/ou de suppression des données et/ou des paramètres de la mémoire. L'unité à microprocesseur 14 est susceptible de gérer également diverses autres opérations de la fonction agenda, et comprend certains modules non représentés relatifs à la base de temps. Le microprocesseur de ladite unité peut être par exemple le microprocesseur PUNCH à 8-bit fabriqué par la société EM Microelectronic-Marin SA en Suisse.

Les plages sensibles C1 à C7 des capteurs du verre tactile 4 sont reliés à l'unité à microprocesseur 14 du dispositif de gestion mémoire. La liaison de chaque plage sensible à l'unité est réalisée par l'intermédiaire de fils conducteurs transparents sur la face intérieure du verre et d'un connecteur non représentés.

Différents menus peuvent être sélectionnés par l'unité à microprocesseur 14. Il peut s'agir de menus notes, adresses, agenda, transmission et paramètres. Des fiches de données peuvent être éditées, modifiées ou supprimées principalement dans les menus notes, adresses et agenda sélectionnés par l'unité à microprocesseur. Pour chacun de ces menus sélectionnés, des fiches de type différent peuvent être mémorisées. Ces fiches de données de chaque type sont enregistrées dans une zone dynamique 101 de la mémoire non volatile EEPROM 15 par l'intermédiaire de l'unité à microprocesseur 14.

L'unité à microprocesseur 14 reçoit des signaux d'un circuit garde-temps 11 pour cadencer des opérations. Ce circuit garde-temps comprend de manière connue un oscillateur 12 relié à un cristal de quartz 19 pour définir la fréquence des signaux sortant de l'oscillateur, et une série de diviseurs de fréquence 13 fournissant plusieurs signaux de cadencement à l'unité 14.

Les signaux de cadencement servent également à commander des moyens de motorisation 17 du mouvement horloger pour déplacer les aiguilles 7 sur le cadran 8. Au moins un dispositif d'entraînement 16 des affichages à cristaux liquides 5 et 6 reçoit des signaux de commande de l'unité à microprocesseur 14. Ces signaux de commande servent à afficher des menus sélectionnés ou des champs de fiches de données sur les affichages à cristaux liquides 5 et 6.

Des moyens d'émission et/ou de réception de signaux radiofréquences courte distance comprennent un module RF 18 et une antenne 2. Le module RF 18 est relié à l'unité à microprocesseur 14. Des signaux de données d'agenda peuvent être envoyés par les moyens d'émission et/ou de réception dans un menu de transmission de la montre agenda à destination d'une unité périphérique, telle qu'une station d'ordinateur ou une autre montre. De même, l'unité périphérique ou une autre montre peut transmettre des signaux de données d'agenda aux moyens d'émission et/ou de réception de la montre. Les données tirées desdits signaux de données peuvent être mémorisées dans la mémoire 15 par l'intermédiaire de l'unité à microprocesseur 14.

Pour réduire la consommation de la source d'énergie, les capteurs C1 à C7 sont dans un mode de repos ou de veille lorsque la fonction agenda n'est pas activée, ainsi que les affichages à cristaux liquides 5, 6 et une partie de l'unité à microprocesseur 14. Dans ce mode de veille, la montre agenda ne fournit que l'information de l'heure, et les capteurs restent inactifs.

Le bouton-poussoir 9 situé sur le boîtier 3 peut être activé pour fournir une commande à l'unité à microprocesseur 14 afin d'enclencher ou de réinitialiser la fonction agenda. Dans ce mode de fonctionnement, les aiguilles 7 sont entraînées par les moyens de motorisation 17 de façon à occuper une position ne perturbant pas la vision de données sur chaque affichage. Une fois que la fonction agenda n'est plus utilisée, par exemple après une période déterminée d'inactivité, elle est désactivée. Dès ce moment, les aiguilles 7 sont ramenées dans leur position d'indication de l'heure d'une manière bien connue par un homme du métier dans ce domaine technique.

Il est à noter qu'il peut être envisagé que la fonction agenda soit enclenchée par l'action sur au moins un des capteurs C1 à C7 pendant une période déterminée. Toutefois, dans une ambiance particulièrement humide, les capteurs risquent d'être continuellement activés par la présence de l'eau sur le verre 4 de montre 1. De ce fait, une consommation inutile en énergie risque de décharger relativement vite la pile ou l'accumulateur de la montre.

La mémoire non volatile EEPROM 15 peut comprendre plus de 64 kOctets (kBytes en terminologie anglaise) de données et/ou de paramètres. La mémoire 15 est divisée en deux zones. Une première zone statique 100 comprend des données et/ou des paramètres qui occupent des positions mémoire fixes. Une seconde zone dynamique 101 comprend différents types de fiches de données mémorisées. Ces types de fiches concernent des notes, des adresses, un agenda et également des fiches de destruction. Ces fiches de destruction ne sont pas visibles pour l'utilisateur de la montre. Elles servent uniquement pour définir des fiches note, adresse ou agenda qui ont été détruites et la date de destruction des fiches. Ces fiches de destruction permettent d'informer une unité périphérique en communication avec la montre des fiches note, adresse et agenda qui ont été détruites. Il peut être prévu que ces fiches de destruction disparaissent après une période de temps déterminée selon une programmation faite dans la montre ou dans une unité périphérique en communication avec la montre.

A titre d'exemple, il est possible de composer et d'enregistrer dans la zone dynamique 101 de la mémoire à 64 kOctets 1920 fiches notes, ou 2100 fiches agenda, ou 333 fiches adresses avec des champs complétés de 12 caractères en moyenne. Pour différents types de fiches, la mémoire 15 peut mémoriser par exemple 100 fiches notes, 1000 fiches agenda et 160 adresses ce qui est considérable pour une telle montre agenda. Toutefois, une mémoire de capacité plus importante peut être envisagée sans nuire à la consommation électrique de la montre agenda. Chaque champ des fiches peut comprendre par exemple jusqu'à 63 caractères de type alphanumérique.

La zone statique comprend notamment plusieurs paramètres relatifs à des fonctions horlogères par exemple concernant le niveau de la batterie, une valeur d'inhibition concernant des coups d'horloge ou des alarmes programmées et le délai d'anticipation des alarmes. De plus, cette zone statique comprend des données et/ou des paramètres concernant notamment la taille et nombre de pages de la mémoire, le seuil des capteurs, des valeurs d'ajustement de fréquence pour le module RF, un compteur d'identification de fiche, le nombre de jours de destruction des fiches destruction, des codes confidentiels de la montre et de la station d'ordinateur, la date de transmission, la dernière station d'ordinateur questionnée, la musique et la langue programmées.

Pour chaque type de fiches de données mémorisées dans la zone dynamique 101, des pointeurs de la première et dernière fiche de chaque type sont mémorisés dans la zone statique 100, ainsi que le nombre de fiches de chaque type. Ces pointeurs vont permettre à l'unité à microprocesseur de retrouver rapidement et aisément les différentes fiches de chaque type à consulter de la zone dynamique. De plus, un pointeur de zone vide indique l'endroit de la place mémoire libre après la dernière fiche mémorisée dans la zone dynamique. Ce pointeur de zone vide peut servir à l'unité à microprocesseur 14 pour commander l'affichage de la capacité mémoire utilisée.

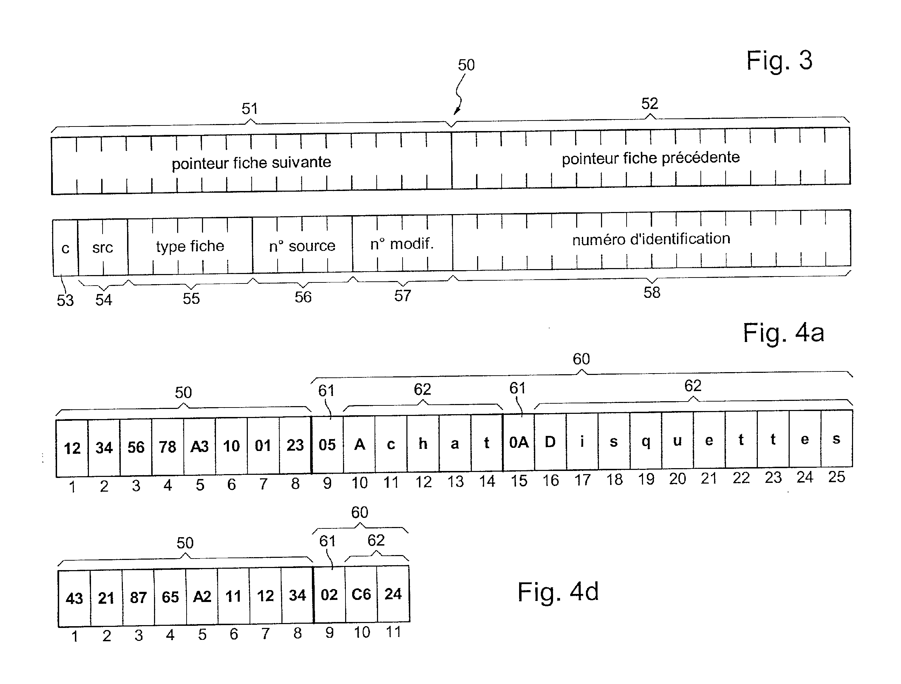

Chaque type de fiches de données mémorisées dans la zone dynamique 101 débute par une entête 50 expliquée en référence à la figure 3. Cette entête de 8 octets comprend un premier pointeur de la fiche suivante 51 défini sur 2 octets suivi par un pointeur de la fiche précédente 52 défini sur 2 octets. Le pointeur de la fiche précédente de la première fiche de chaque type mémorisée dans la zone dynamique 101 renvoie au pointeur de la première fiche dans la zone statique 100. Le pointeur de la fiche suivante de la dernière fiche de chaque type mémorisée dans la zone dynamique 101 renvoie au pointeur de la dernière fiche dans la zone statique 100. Grâce à ces pointeurs de fiches suivante et précédente, tous les champs de données de chaque type de fiches peuvent être facilement et rapidement retrouvés par l'unité à microprocesseur. Ces pointeurs permettent de créer une chaîne de fiches de chaque type à parcourir dans une direction ou dans une direction opposée.

Il est également prévu dans l'entête 50 après les pointeurs 51 et 52, un bit c de confidentialité 53. Si ce bit 53 vaut 1, la fiche n'est visible que si le code de confidentialité de la station d'ordinateur est égal au code de confidentialité de la montre. Après ce bit 53, deux bits src 54 indiquent la source de création de la fiche. Si les deux bits 54 valent 01, la fiche est créée sur la montre, alors que si les deux bits 54 valent 10, la fiche est créée sur une station d'ordinateur. Les combinaisons 00 et 11 sont réservées pour d'autres usages.

Cinq bits 55 suivants définissent le type de fiches (note, adresse, agenda, destruction). La valeur de ces cinq bits correspond au nombre de champs +1 qui compose la fiche. Une fiche note comprend deux champs +1. Une fiche adresse comprend dix-sept champs +1. Une fiche agenda comprend quatre champs +1. Finalement, une fiche destruction comprend un champ +1.

Quatre bits 56 suivants définissent le numéro de la source de création. Ce numéro ne change pas lors d'une modification de la fiche. Ce numéro est différent pour chaque montre ou chaque station d'ordinateur. Dans le cas présent, il est possible d'attribuer seize numéros à des montres et seize numéros à des stations d'ordinateur en combinaison des deux bits 54.

Quatre bits 57 suivants définissent le numéro de modification de la fiche. Chaque fois qu'une fiche est modifiée, ce numéro de modification est incrémenté de 1 jusqu'à 15.

Finalement, 2 octets 58 sont prévus pour le numéro d'identification de la fiche. Chaque station d'ordinateur et chaque montre ont un compteur personnel de création de fiches. Pour chaque fiche créée, un numéro suivant du compteur est attribué. Ce numéro d'identification ne change pas lors de modifications de la fiche.

Des exemples de fiches des quatre types mémorisés dans la zone dynamique de la mémoire sont montrés aux figures 4a à 4d. Chaque case définit un octet comprenant deux chiffres en hexadécimal. De manière à montrer le nombre d'octets de chaque fiche, les cases de la fiche sont numérotées.

La figure 4a présente un exemple d'une fiche note. Cette fiche comprend une entête 50 et un ensemble 60 de deux champs de données 62. Un octet 61 précède chaque champ de données 62 de manière à définir la taille du champ. Cela permet ainsi à l'unité à microprocesseur de connaître rapidement l'endroit de la fin de chaque champ et également de la fiche de données.

Dans l'entête 50, il est indiqué que la fiche suivante se trouve à l'adresse 1234 en hexadécimal dans les cases 1 et 2. Dans les cases 3 et 4, il est indiqué que la fiche précédente se trouve à l'adresse 5678 en hexadécimal. A la case 5, il est indiqué qu'il s'agit d'une fiche confidentielle créée sur la montre, et que la fiche est du type note. A la case 6, il est indiqué que la fiche a été créée par la première montre et que c'est une fiche originale (non modifiée). Finalement aux cases 7 et 8 de l'entête 50, il est indiqué que la 123^{e} fiche en hexadécimal a été créée par la montre ce qui correspond à la 291^{e} fiche en base 10.

A la case 9, la taille du premier champ de données est définie. Dans ce cas, 5 caractères du titre "Achat" composent le premier champ correspondant aux cases 10 à 14. A la case 15, la taille du second champ de données est définie. Ce second champ est composé de 10 caractères du texte "Disquettes" correspondant aux cases 16 à 25.

Il est à noter que chaque nouvelle fiche note mémorisée dans la zone dynamique est placée en dernière position de la chaîne. Toutes les fiches note sont ordonnées par ordre chronologique d'édition et de mémorisation dans la mémoire. Si les champs titre et texte sont vides, la fiche est réputée vide et n'est pas mémorisée.

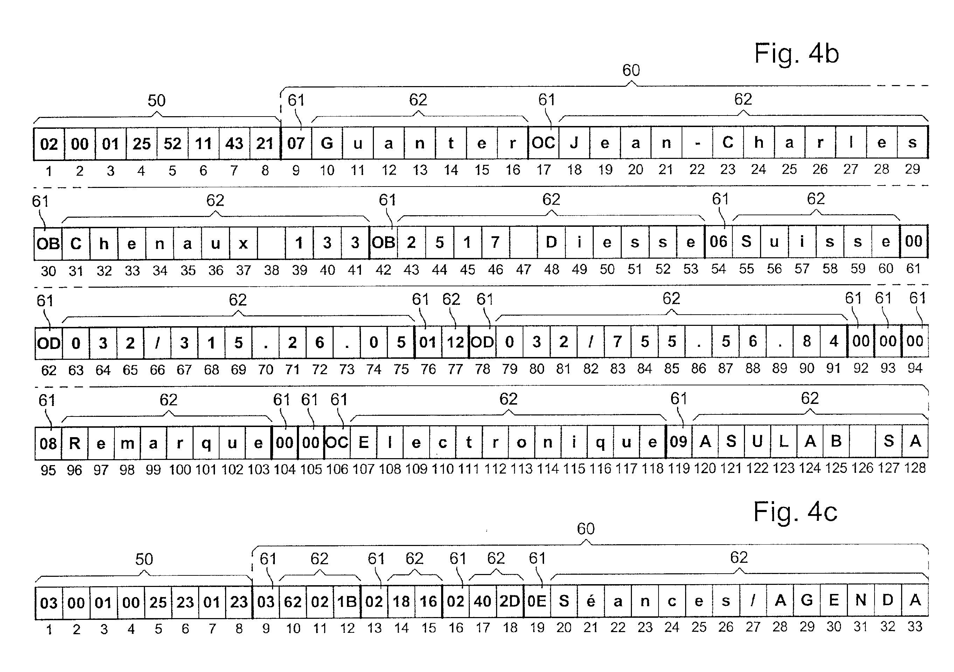

La figure 4b montre un exemple d'une fiche adresse. Comme pour la figure 4a, cette fiche comprend une entête 50 et un ensemble 60 de dix-sept champs de données 62 qui ne sont pas tous complétés. Un octet 61 précède chaque champ pour définir la taille du champ.

Dans l'entête 50 aux cases 1 à 8, il est indiqué que la fiche suivante se trouve à l'adresse 200 en hexadécimal et la fiche précédente se trouve à l'adresse 125 en hexadécimal. La fiche est non confidentielle et a été créée sur une station d'ordinateur. La fiche est du type adresse de type 18 avec dix-sept champs. Cette fiche a été créée par la première station d'ordinateur et elle a été modifiée une fois. La fiche créée est la 4321^{e} fiche en hexadécimal.

A la case 9, la taille du premier champ de données, qui concerne le nom de la personne, est définie. Dans cet exemple, 7 caractères du nom "Guanter" composent le premier champ correspondant aux cases 10 à 16. A la case 17, la taille du second champ de données, qui est relatif au prénom de la personne, est définie. Dans cet exemple,12 caractères composent le prénom "Jean-Charles" correspondant aux cases 18 à 29.

A la case 30, la taille du troisième champ de données, qui concerne la rue d'habitation, est définie. 11 caractères composent ce troisième champ de la rue "Chenaux 133" correspondant aux cases 31 à 41. A la case 42, la taille du quatrième champ de données, qui est relative à la ville d'habitation avec son numéro postal, est définie 11 caractères composent le quatrième champ de la ville "2517 Diesse" correspondant aux cases 43 à 53. A la case 54, la taille du cinquième champ de données, qui est relatif au pays, est définie. 6 caractères composent le cinquième champ du pays "Suisse" correspondant aux cases 55 à 60.

A la case 61, il est indiqué qu'aucun caractère ne compose le sixième champ de données relatif à un premier type de téléphone. A la case 62, la taille du septième champ de données, qui concerne un premier numéro de téléphone, est définie. 13 caractères composent le septième champ de données du premier numéro de téléphone "032/315.26.05" correspondant aux cases 63 à 75. A la case 76, la taille du huitième champ de données, qui est relatif à un autre type de téléphone, est définie. 1 octet compose ce huitième champ définissant un type professionnel de téléphone par le code 12. A la case 78, la taille du neuvième champ de données, qui est relatif à un second numéro de téléphone, est définie. 13 caractères composent le neuvième champ de données du second numéro de téléphone "032/755.56.84" correspondant aux cases 79 à 91.

Aux cases 92 à 94, il est indiqué qu'aucun caractère ne compose les dixième, onzième et douzième champs qui concernent le type et le numéro d'un troisième téléphone, ainsi qu'une adresse E-mail. A la case 95, la taille du treizième champ de données, qui concerne une première remarque, est définie. 8 caractères composent ce treizième champ de la première remarque "Remarque" correspondant aux cases 96 à 103. A la case 104, il est indiqué qu'aucun caractère ne compose le quatorzième champ d'une seconde remarque.

A la case 105, il est indiqué qu'aucun caractère ne compose le quinzième champ relatif à un titre d'une personne. A la case 106, la taille du seizième champ de données, qui concerne la division de travail de la personne, est définie. 12 caractères composent ce seizième champ de la division "Electronique" correspondant aux cases 107 à 118. Finalement à la case 119, la taille du dix-septième champ de données, qui concerne l'entreprise de travail, est définie. 9 caractères composent ce dix-septième champ d'entreprise "ASULAB SA" correspondant aux cases 120 à 128.

Il est à noter que c'est l'ordre alphabétique des nom et prénom qui définit l'ordre des fiches de la chaîne de fiches adresse. Si les premier et second champs d'une fiche adresse sont vides, la fiche est réputée vide et n'est pas mémorisée, même si les autres champs sont complétés.

La figure 4c montre un exemple d'une fiche agenda. Comme pour les figures 4a et 4b, cette fiche comprend une entête 50 et un ensemble 60 de quatre champs de données 62. Un octet 61 précède chaque champ pour définir la taille du champ.

Dans l'entête 50 aux cases 1 à 8, il est indiqué que la fiche suivante se trouve à l'adresse 300 en hexadécimal et la fiche précédente se trouve à l'adresse 100 en hexadécimal. La fiche est non confidentielle et a été créée sur la montre. La fiche est du type agenda de type 5 avec quatre champs. Cette fiche a été créée par la seconde montre et elle a été modifiée trois fois. La fiche est la 123^{e} fiche en hexadécimal.

A la case 9, la taille du premier champ de données, qui concerne une date de rendez-vous, est définie. Dans cet exemple, 3 octets de données de date composent le premier champ représentant la date 1998/février/27 correspondant aux cases 10 à 12. A la case 13, la taille du second champ de données, qui concerne une heure du rendez-vous, est définie. 2 octets de l'heure composent le second champ représentant l'heure 11h30 avec l'alarme enclenchée (bit 12) et le matin (bit 14) correspondant aux cases 14 et 15. A la case 16, la taille du troisième champ de données, qui concerne une heure de fin de rendez-vous, est définie. 2 octets de l'heure de fin composent ce troisième champ représentant 12h15 de l'après-midi correspondant aux cases 17 et 18. Finalement à la case 19, la taille du quatrième champ de données, qui concerne un texte, est définie. 14 caractères composent ce quatrième champ de texte "Séances/AGENDA" correspondant aux cases 20 à 33.

Il est à noter que c'est l'ordre chronologique de la date puis de l'heure qui fait foi pour définir l'ordre des fiches de la chaîne de fiches agenda. Si le quatrième champ texte est vide, la fiche est réputée vide et n'est pas mémorisée, même si les autres champs sont complétés.

La figure 4d montre un exemple d'une fiche destruction qui n'est pas visible pour un utilisateur de la montre. Comme pour les figures 4a à 4c, cette fiche comprend une entête 50 et un ensemble 60 qui comprend un unique champ de données 62 et un octet 61 qui précède le champ pour définir sa taille.

Dans l'entête 50 aux cases 1 à 8, il est indiqué que la fiche suivante se trouve à l'adresse 4321 en hexadécimal et la fiche précédente se trouve à l'adresse 8765 en hexadécimal. La fiche détruite était confidentielle et avait été créée sur la montre. La fiche est du type 2 avec un unique champ qui correspond à une fiche destruction. Cette fiche a été créée par la première montre et elle a été modifiée une fois. La fiche détruite est la 1234^{e} fiche en hexadécimal.

A la case 9, la taille du seul champ de données, qui concerne une date de destruction, est définie. 2 octets de la date de destruction composent ce champ représentant la date du 4 janvier 1999.

Ces fiches destruction sont stockées dans la zone dynamique de la mémoire dans un ordre croissant des dates de destruction. Ces fiches destruction restent toujours au même endroit avant une opération subséquente de compactage, car elles sont composées d'un champ uniquement de deux octets.

Aux figures 5a et 5b, la mémoire non volatile 15 est représentée. Cette mémoire comprend une zone statique 100 pour mémoriser des données et/ou des paramètres dans des positions mémoire fixes, et une zone dynamique 101 pour mémoriser des fiches de différents types. Au début en introduisant de nouvelles fiches de différents types sans modification ou suppression desdites fiches, ces fiches se suivent par ordre d'entrée dans la zone dynamique de la mémoire 15.

Dans ces figures 5a et 5b, toutes les fiches de différents types ont été dessinées avec une taille égale par mesure de simplification, ce qui n'est bien évidemment pas le cas en réalité. Normalement, les fiches destruction sont toujours les plus petites avec un champ à 2 octets, et les fiches adresses les plus grandes. La taille de chaque fiche dépend du nombre d'octets de chaque champ de données.

La mémoire non volatile 15 présentée à la figure 5a comprend plusieurs espaces vides 102 entre les fiches de données de différents types dans la zone dynamique 101. Ces espaces vides sont dus à des modifications de fiches ou des suppressions de fiches. Les fiches supprimées sont remplacées par des fiches destruction, dont le champ ne comprend que 2 octets, et des espaces vides sont placés de la fin de cette fiche destruction à une prochaine fiche. Lors d'une modification d'une fiche note, adresse ou agenda, la fiche est de préférence déplacée dans une première étape au premier octet libre désigné par le pointeur de zone vide PV. Ensuite de quoi, plusieurs modifications des champs peuvent être opérés. Au terme des modifications, si la fiche modifiée est plus courte ou égale à la fiche originale, cette fiche modifiée est replacée au même endroit initial dans la zone dynamique, et des espaces vides comblent les octets libérés. Par contre, si la fiche modifiée est plus grande que la fiche originale, elle reste comme dernière fiche de la zone dynamique et le pointeur de zone vide est déplacé pour indiquer la fin de la fiche modifiée. Des espaces vides comblent les octets libérés de la fiche modifiée et déplacée.

Les espaces vides entre les fiches de données sont complétés par plusieurs octets valant FF en hexadécimal ou par des bits à 1. Ceci permet d'éviter de rencontrer des problèmes lors de l'opération de compactage de l'espace mémoire des données mémorisées. Les FF sont indispensables pour pouvoir compacter. Une fois l'opération de compactage lancée, les FF temporaires permettent l'interruption rapide.

On comprend bien qu'après de multiples modifications ou suppressions des fiches de données la place mémoire disponible est réduite. A titre illustratif et de manière schématique, la partie 104 de la zone dynamique représente la zone mémoire occupée par les fiches de données sur 6 lignes avant compression, alors que la partie 103 représente l'espace mémoire libre pour d'autres fiches à mémoriser. Par mesure de simplification, le type de chaque fiche est représenté sur les figures 5a et 5b par "ad" pour une fiche adresse, par "ag" pour une fiche agenda, par "no" pour une fiche note et par "de" pour une fiche destruction. Le numéro de chaque fiche introduite est également placé à la suite de "ad", "ag", "no" et "de".

Chaque fiche de chaque type comprend une entête 50, qui contient notamment un pointeur de la fiche suivante 51 du même type et un pointeur de la fiche précédente 52 du même type, et des champs de données 60.

Dans la zone statique 100, uniquement des ensembles 110, 111, 112 et 113, qui comprennent des pointeurs 116 et 117 des première et dernière fiches de chaque type, ainsi que le nombre 115 de fiches de chaque type, sont montrés aux figures 5a et 5b. Un pointeur de zone vide 114 est également montré dans la zone statique. Le premier ensemble 110 est relatif aux fiches note. Le second ensemble 111 est relatif aux fiches adresse. Le troisième ensemble 112 est relatif aux fiches agenda. Finalement, le quatrième ensemble 113 est relatif aux fiches destruction.

A la figure 5a, en prenant comme exemple l'ensemble 110 relatif aux fiches notes. Le pointeur 116 de la première fiche de l'ensemble 110 désigne le pointeur de la fiche suivante de la première fiche note "no1" illustrée par la flèche 105. Le pointeur de la fiche précédente de cette première fiche renvoie au pointeur 116 de la première fiche de l'ensemble illustré par la flèche 106. Une chaîne est donc établie de la première fiche à la dernière fiche de la zone dynamique grâce à l'entête de chaque fiche qui comprend des pointeurs des fiches suivante et précédente. Le pointeur de la fiche suivante de la dernière fiche note renvoie au pointeur 117 de dernière fiche dans la zone statique. Le pointeur 117 de la dernière fiche de l'ensemble 110 désigne le pointeur de la fiche précédente de la dernière fiche. Pour tous les autres ensembles 111, 112 et 113, le même principe par pointeurs de fiches suivante et précédente est opéré.

A chaque introduction d'une nouvelle fiche ou lors de modifications ou suppressions de fiches, les pointeurs des fiches précédant et suivant la fiche déplacée ou supprimée sont réajustés.

Comme les fiches de données de la zone dynamique 101 ne sont pas mémorisées dans un ordre en fonction du type de fiches, la chaîne établie pour chaque type permet à l'unité à microprocesseur de retrouver rapidement dans les deux directions toutes les fiches de données mémorisées.

Le pointeur de zone vide 114 peut être utilisé par l'unité à microprocesseur pour l'indication de la capacité mémoire utilisée avant ou après l'opération de compactage de l'espace mémoire des fiches de données mémorisées. Cette indication peut apparaître sur au moins un affichage à cristaux liquides de la montre.

La figure 5b illustre de manière schématique des fiches de données de la zone dynamique après l'opération de compression ou compactage. Lors de cette opération de compactage, l'unité à microprocesseur va détecter tous les espaces vides 102 et les supprimer. De ce fait, les fiches sont déplacées une à une pour être appondues à une fiche précédente. Après déplacement de la fiche, les pointeurs des fiches précédente et suivante sont réajustés. L'opération de compactage commence depuis la première fiche détectée dans la zone dynamique en supprimant les espaces vides précédents.

Une fois que l'opération de compactage est terminée, toutes les fiches se suivent dans la zone dynamique depuis l'adresse 100 en hexadécimal suivant directement la zone statique. La durée de cette opération de compactage peut être relativement longue, par exemple de 15 minutes si la mémoire est pleine. Cette lenteur de compactage est compréhensible car, les signaux de cadencement fournis à l'unité à microprocesseur sont de l'ordre de 32 kHz provenant du circuit garde-temps horloger.

A titre illustratif et de manière schématique, la partie 104 de la zone dynamique représente la zone mémoire occupée par les fiches de données, illustrées sur 4 lignes, après compression ou suppression des espaces vides entre les fiches. La partie 103 représente l'espace mémoire libre pour d'autres fiches à mémoriser. On remarque le gain de place réalisé suite à l'opération de compactage.

A partir de la description qui vient d'être faite de multiples variantes de réalisation du dispositif de commande manuelle pour une montre électronique peuvent être conçues par l'homme du métier sans sortir du cadre de l'invention définie par les revendications. La montre peut être uniquement un bracelet avec des fonctions horlogères et des touches réparties sur la longueur du bracelet. L'entête peut comprendre plus de 8 octets dans lesquels la fin de la fiche de données peut être indiquée, ainsi qu'un plus grand nombre de sources par exemple. De plus, la mémoire non volatile de type EEPROM peut être remplacée par toute autre mémoire non volatile, telle qu'une mémoire de type Flash par exemple. Les capteurs disposés sur le verre de montre peuvent être également des capteurs du type piézoélectrique. Dans ce cas, l'opération de compactage de la mémoire peut être lancée en pressant avec un doigt sur au moins un capteur avec une pression au-dessus d'un seuil déterminé.

## Revendications

1. Dispositif de gestion mémoire dans une montre électronique à touches de commande (C1 à C7; 9), le dispositif comprenant une mémoire non volatile (15) reliée à une unité à microprocesseur (14) programmée pour gérer des opérations d'enregistrement et/ou de suppression de données et/ou de paramètres dans la mémoire, l'activation d'au moins une touche de la montre (C1) permettant de fournir une commande à l'unité pour la gestion d'opérations d'enregistrement et/ou de suppression des données et/ou des paramètres, **caractérisé en ce que** la mémoire (15) comprend une première zone statique (100) pour mémoriser des données et/ou des paramètres dans des positions mémoire fixes et une seconde zone dynamique (101) pour mémoriser des fiches de données de différents types, la position mémoire des fiches de chaque type étant gérée par l'unité à microprocesseur (14) en fonction de modification ou suppression de certaines fiches et en fonction de l'enregistrement de nouvelles fiches, chaque fiche débutant par une entête dans laquelle est placé un premier pointeur (51, 52) pour établir un lien entre les fiches de même type dans la zone dynamique de la mémoire, et **en ce que** l'unité à microprocesseur (14) est agencée pour compacter ou compresser l'espace mémoire (104) des fiches de données mémorisées de la zone dynamique (101) de manière automatique ou par l'activation d'au moins une touche de validation (C1) de la montre.

2. Dispositif selon la revendication 1, **caractérisé en ce que** la zone statique (100) de la mémoire comprend des ensembles (110, 111, 112, 113) relatifs à chaque type de fiches, dans lesquels le nombre de fiches et deux pointeurs de première et dernière fiches de chaque type sont indiqués de manière à fournir à l'unité à microprocesseur (14) dans des positions mémoire fixes des liens à chaque chaîne, et **en ce que** l'entête de chaque fiche comprend un second pointeur pour déterminer avec le premier pointeur les fiches suivante et précédente de même type de manière à permettre à l'unité à microprocesseur de parcourir dans deux directions les fiches de chaque chaîne.

3. Dispositif selon l'une des revendications 1 et 2 pour une montre agenda, dont les types de fiches à mémoriser concernent des fiches note, adresse, agenda et destruction, **caractérisé en ce que** la zone statique comprend un pointeur de zone vide (PV) indiquant la fin de la dernière fiche mémorisée dans la zone dynamique (101) pour que l'unité à microprocesseur(14) fournisse des signaux de commande à un dispositif d'entraînement d'affichage (16) de la montre afin d'indiquer sur au moins un affichage à cristaux liquides de la montre la capacité mémoire utilisée avant ou après l'opération de compactage de l'espace mémoire des fiches de données mémorisées.

4. Dispositif selon la revendication 3, **caractérisé en ce que** l'unité à microprocesseur (14) déclenche l'opération de compactage de l'espace mémoire des fiches de données mémorisées de la zone dynamique (101) lorsqu'un menu paramètres est sélectionné par l'unité sous une rubrique relative à la capacité mémoire visionnée sur au moins un affichage à cristaux liquides (5, 6) de la montre (1) et qu'au moins une touche de validation (C1) de la montre est activée pendant une durée déterminée.

5. Dispositif selon la revendication 3, **caractérisé en ce que**, lors de la suppression d'une fiche de type note, adresse ou agenda, l'unité à microprocesseur (14) remplace la fiche supprimée par une fiche destruction au même endroit de la zone dynamique (101), la fiche destruction comprenant une entête (50) avec deux pointeurs de fiches destruction suivante et précédente,.

6. Procédé de gestion mémoire dans une montre électronique, qui comprend des touches de commande (C1 à C7), une mémoire non volatile (15) reliée à une unité à microprocesseur (14) programmée pour gérer des opérations d'enregistrement et/ou de suppression de données et/ou de paramètres dans la mémoire, l'activation d'au moins une touche de la montre (C1) permettant de fournir une commande à l'unité pour la gestion d'opérations d'enregistrement et/ou de suppression des données et/ou des paramètres, ladite mémoire (15) comprenant une zone statique(100) pour mémoriser des données et/ou des paramètres dans des positions fixes et une zone dynamique (101) pour mémoriser des fiches de données de différents types, la position mémoire des fiches étant gérée par l'unité à microprocesseur en fonction de modification ou suppression de certaines fiches et en fonction de l'enregistrement de nouvelles fiches, le procédé étant **caractérisé en ce qu'**il comprend des étapes consistant à :
- mémoriser des fiches de données d'au moins un type parmi plusieurs types, chaque type de fiches débutant par une entête dans laquelle est placé un premier pointeur (51, 52) pour établir un lien entre les fiches de même type dans la zone dynamique de la mémoire,
- compacter ou compresser l'espace mémoire (104) des fiches de données mémorisées dans la zone dynamique (101) de la mémoire par l'unité à microprocesseur (14) de manière automatique ou par l'activation d'au moins une touche de validation (C1) de la montre, et
- afficher sur au moins un affichage à cristaux liquides (5, 6) de la montre une capacité mémoire utilisée avant ou après l'opération de compactage de l'espace mémoire (104) des fiches de données mémorisées.

7. Procédé selon la revendication 6 dans une montre agenda dans laquelle les touches de commande sont un nombre déterminé de capteurs sensibles (C1 à C7) au toucher disposés sur un verre (4) de montre et un bouton-poussoir (9), **caractérisé en ce qu'**il comprend une étape préliminaire consistant à :
- presser le bouton-poussoir (9) de la montre pour activer sa fonction agenda, les capteurs, l'affichage à cristaux liquides et une partie de l'unité à microprocesseur étant placés au préalable et/ou après une période d'inactivité de la fonction agenda dans un mode de veille.

8. Procédé selon la revendication 6, **caractérisé en ce que**, pour l'opération de compactage, il comprend une étape consistant à activer la touche de validation (C1) pendant une durée déterminée dans un menu paramètres sélectionné par l'unité à microprocesseur (14) sous une rubrique relative à la capacité mémoire visionnée sur au moins un affichage à cristaux liquides (5, 6) de la montre (1).

9. Procédé selon la revendication 6, **caractérisé en ce que**, lors de l'opération de compactage, il comprend des étapes consistant à :
- détecter des espaces vides depuis une première fiche de données de la zone dynamique jusqu'à une seconde fiche de données,
- déplacer la seconde fiche de données pour que le début de cette prochaine fiche soit appondu à la fin de la première fiche en remplacement des espaces vides entre les deux fiches,
- ajuster les pointeurs des fiches suivante et précédente de la seconde fiche déplacée,
- répéter successivement les trois étapes de détection d'espaces vides, de déplacement de fiche et d'ajustage des pointeurs pour toutes les fiches de la zone dynamique.

10. Procédé selon la revendication 6, **caractérisé en ce qu'**il comprend, dans une opération de modification d'une fiche de données, des étapes consistant à :
- déplacer la fiche de données à modifier après la dernière fiche de la zone dynamique signalée par un pointeur de zone vide (PV) mémorisé dans la zone statique (100),
- modifier la fiche de données,
- comparer la taille de la fiche avant et après modification, si la taille de la fiche modifiée est plus grande que la fiche avant modification, cette fiche modifiée reste comme dernière fiche et le pointeur de zone vide indique la fin de cette fiche modifiée, et si la taille de cette fiche modifiée est plus petite ou égale à la taille de la fiche avant modification, la fiche modifiée est replacée à l'endroit initial dans la zone dynamique.
